Europäisches Patentamt

European Patent Office

Office européen des brevets

(11) Veröffentlichungsnummer: **0 415 496 A2**

# EUROPÄISCHE PATENTANMELDUNG

(21) Anmeldenummer: **90202284.7**

(22) Anmeldetag: **27.08.90**

(51) Int. Cl.5: **H05B 41/29, H05B 41/38**

(30) Priorität: **31.08.89 DE 3928810**

(43) Veröffentlichungstag der Anmeldung:
**06.03.91 Patentblatt 91/10**

(84) Benannte Vertragsstaaten:
**AT BE CH DE ES FR GB IT LI NL**

(71) Anmelder: **Philips Patentverwaltung GmbH**
**Wendenstrasse 35 Postfach 10 51 49**
**W-2000 Hamburg 1(DE)**

(84) **DE**

Anmelder: **N.V. Philips' Gloeilampenfabrieken**

**Groenewoudseweg 1**
**NL-5621 BA Eindhoven(NL)**

(84) **BE**

(72) Erfinder: **Wegener, Armin**
**Kleinmarschierstrasse 61**
**W-5100 Aachen(DE)**

(74) Vertreter: **Peters, Carl Heinrich, Dipl.-Ing. et al**
**Philips Patentverwaltung GmbH**
**Wendenstrasse 35 Postfach 10 51 49**
**W-2000 Hamburg 1(DE)**

(54) **Schaltungsanordnung zum Speisen einer Last.**

(57) Es wird eine Schaltungsanordnung zum Speisen einer Last (1) aus einer Gleichspannungsquelle (an 2, 3) über ein Schaltnetzteil (4), mit einer Steuerschaltung (13) zum Steuern des Stromes durch die Last (1) in einem Anlaufzeitintervall nach Inbetriebnahme beschrieben. Um der Last in einem Anlaufzeitintervall nach der Inbetriebnahme eine höchstmögliche Leistung zuzuführen, ist die Steuerschaltung (13) zur Durchführung folgender Signalverarbeitungsschritte eingerichtet:

- Bestimmen eines Anlaufwertes (Ia) für den Strom durch die Last (1) aus einer vorgegebenen, von der Last (1) höchstens aufzunehmenden Leistung (Pzul) und der von der Gleichspannungsquelle gelieferten Spannung (Uq),
- mit Ablauf einer ersten Verzögerungszeit (t1) nach Inbetriebnahme einsetzendes Ableiten eines von Null stetig auf einen Endwert ansteigenden Verminderungswertes (V) aus dem Anlaufwert (Ia),
- Bilden eines Grenzstromwertes (G) als Linearkombination aus dem Anlaufwert (Ia) und dem Verminderungswert (V),
- mit Ablauf einer zweiten Verzögerungszeit (t2) nach Inbetriebnahme einsetzendes Zuführen eines Regelsignals (R) von einem Regler (40) bei gleichzeitigem Begrenzen der Werte des Regelsignals (R) auf den Grenzstromwert (G) und

- Bilden eines Steuersignals (S) zum Steuern des Stromes durch die Last als Linearkombination des Anlaufwertes (Ia), des Verminderungswertes (V) und des Regelsignals (R).

FIG.3

# SCHALTUNGSANORDNUNG ZUM SPEISEN EINER LAST

Die Erfindung bezieht sich auf eine Schaltungsanordnung zum Speisen einer Last aus einer Gleichspannungsquelle über ein Schaltnetzteil, mit einer Steuerschaltung zum Steuern des Stromes durch die Last in einem Anlaufzeitintervall nach Inbetriebnahme.

Aus der GB-OS 2 080 054 ist eine Speiseschaltung für eine Hochdruckgasentladungslampe bekannt, die ein schnelles Aufwärmen der kalten Lampe ermöglichen soll. Außerdem sollen Schwankungen der Speisespannung ausreguliert und ein schnelles Neustarten ermöglicht werden, wenn die Lampe heiß ist und kurzzeitig abgeschaltet wurde. Es soll dabei ferner erreicht werden, daß der Aufwärmstrom durch die Lampe einen möglichst geringen Spitzenwert aufweist. Dazu wird während der Aufwärmperiode ein überwiegend rechteckförmiger Strom durch die Lampe geführt, der von einer Steuerschaltung gesteuert wird, die die Summe des Stromes durch die Lampe und der über der Lampe anliegenden Spannung oder zumindest eine Linearkombination aus dem Strom und der Spannung konstant hält. Dadurch soll ein Aufwärmvorgang erzeugt werden, bei dem der Strom durch die Lampe proportional zur zunehmenden Spannung an der Lampe abnimmt. In einer praktischen Ausführungsform dieser Schaltungsanordnung nach dem Stand der Technik wird dazu die Summe der Spannungen über einem Strommeßwiderstand, der mit dem Strom durch die Lampe gespeist wird, und einem Spannungsmeßwiderstand, der Teil eines die Lampe überbrückenden Widerstandsspannungsteilers ist, als Absolutwert verstärkt und mit einem Referenzsignal verglichen.

Es zeigt sich bei der Schaltungsanordnung nach GB-OS 2 080 54, daß die in der dortigen Fig. 7 dargestellte Welligkeit des Lampenstromes, d.h. seine Abweichung von einem idealen Rechteckverlauf, im praktischen Betrieb insbesondere bei Lasten hoher Leistungsaufnahme stark hervortritt, so lange nicht eine Energiespeicherspule (Drosselspule) hoher Induktivität und damit hoher Energiespeicherfähigkeit eingesetzt wird. Eine solche Spule ist jedoch aufwendig und teuer und weist insbesondere ein hohes Gewicht auf. Außerdem zeigt sich, daß bei der Schaltungsanordnung nach dem Stand der Technik die der Last zugeführte Leistung zu Beginn der Aufwärmperiode verhältnismäßig gering ist, so daß der Aufwärmvorgang unnötig verzögert wird.

Die Erfindung hat die Aufgabe, eine Schaltungsanordnung der eingangs genannten Art zu schaffen, durch die der Last in einem Anlaufzeitintervall nach Inbetriebnahme eine höchstmögliche Leistung zugeführt wird.

Diese Aufgabe wird erfindungsgemäß dadurch gelöst, daß bei einer Schaltungsanordnung der eingangs genannten Art die Steuerschaltung zur Durchführung folgender Signalverarbeitungsschritte eingerichtet ist:

- Bestimmen eines Anlaufwertes für den Strom durch die Last aus einer vorgegebenen, von der Last höchstens aufzunehmenden Leistung und der von der Gleichspannungsquelle gelieferten Spannung,
- mit Ablauf einer ersten Verzögerungszeit nach Inbetriebnahme einsetzendes Ableiten eines von Null stetig auf einen Endwert ansteigenden Verminderungswertes aus dem Anlaufwert,
- Bilden eines Grenzstromwertes als Linearkombination aus dem Anlaufwert und dem Verminderungswert,
- mit Ablauf einer zweiten Verzögerungszeit nach Betriebnahme einsetzendes Zuführen eines Regelsignals von einem Regler bei gleichzeitigem Begrenzen der Werte des Regelsignals auf den Grenzstromwert und
- Bilden eines Steuersignals zum Steuern des Stromes durch die Last als Linearkombination des Anlaufwertes, des Verminderungswertes und des Regelsignals.

Die erfindungsgemäße Schaltungsanordnung stellt auf einfache Weise sicher, daß die Last mit der höchstens aufzunehmenden, d.h. höchstzulässigen Leistung im Anlaufzeitintervall betrieben wird. Dies ist insbesondere für die Inbetriebnahme von Gasentladungslampen vorteilhaft. So ist beispielsweise beabsichtigt, Hochdruckgasentladungslampen als Kraftfahrzeugbeleuchtung einzusetzen. Bei der Inbetriebnahme einer solchen Beleuchtung muß die volle Lichtausbeute möglichst sofort nach Inbetriebnahme zur Verfügung stehen. Ein sehr kurzes Anlaufzeitintervall, d.h. eine sehr rasche Erwärmung der Lampe auf Betriebstemperatur, ist daher unbedingt erforderlich. Die erfindungsgemäße Schaltungsanordnung ermöglicht dies und stellt dabei gleichzeitig einen wirksamen Schutz der Lampe vor thermischer oder elektrischer Überlastung dar. Im Gegensatz zur Schaltungsanordnung nach der GB-OS 2 080 054 läßt sich nach der Erfindung außerdem erreichen, daß der Spitzenstrom durch die Last den Effektivwert nicht übersteigt. Das bedeutet, daß thermische und elektrische Belastungsgrenzen im Sinne einer gefahrlosen Ausnutzung möglichst hoher Leistungen in der Last näher zusammengerückt werden können.

Bei der erfindungsgemäßen Schaltungsanordnung wird außerdem eine Drosselspule umfangreicher Bauform vermieden, so daß insgesamt eine leichte, handliche Vorrichtung entsteht. Dies ist insbesondere für die Anwendung als Vorschaltgerät einer Hochdruckgasentladungslampe von Vorteil. Die erfindungsgemäße Schaltungsanordnung ist jedoch auch für anders ausgestaltete Lasten, beispielsweise zum Steuern des Anlaufbetriebes eines Elektromotors, einsetzbar.

Die Schaltungsanordnung nach der Erfindung kann in Form eines analogen oder eines digitalen Schaltwerks, ggf. auch mit einem Mikroprozessor, aufgebaut sein. Dabei können einzelne Funktionen wahlweise analog oder digital ausgeführt und die entsprechenden Signalverarbeitungsstufen in verschiedener Weise kombiniert werden.

In einer bevorzugten Ausgestaltung enthält die Steuerschaltung einen Sollwertgeber zum Bestimmen des Anlaufwertes für den Strom durch die Last als Quotienten aus der vorgegebenen Leistung und der gemessenen Spannung der Gleichspannungsquelle. Dies entspricht der physikalisch exakten Lösung, den höchstzulässigen Strom durch die Last aus der vorgegebenen, höchstzulässigen Leistung zu berechnen. Die Leistung wird dabei als fest angenommener Wert, der aus der Dimensionierung der zu speisenden Last errechnet ist, vorgegeben. Dabei kann ein aus der Dimensionierung der gesamten Anordnung sich ergebendes Verhältnis zwischen der von der Gleichspannungsquelle zugeführten Leistung, der in der Schaltungsanordnung auftretenden Verlustleistung sowie der von der Last aufgenommenen Leistung eingerechnet werden, um aus der Messung der von der Gleichspannungsquelle gelieferten Spannung eine korrekte Bestimmung des Stromes durch die Last und damit der durch sie aufgenommenen Leistung zu bewerkstelligen.

In einer einfacheren Ausgestaltung der Steuerschaltung und insbesondere des Sollwertgebers ist der anlaufwert für den Strom durch die Last als Differenz eines die vorgegebene Leistung darstellenden Wertes und der gemessenen Spannung der Gleichspannungsquelle an einem wählbaren Arbeitspunkt bestimmbar. Dabei wird die "Leistungshyperbel" in diesem Arbeitspunkt durch eine Gerade angenähert. Diese Ausgestaltung trägt der Tatsache Rechnung, daß eine Subtrahierschaltung einfacher auszuführen ist als eine Dividierschaltung, wobei die durch diese Vereinfachung hervorgerufenen Abweichungen von den idealen Betriebsverhältnissen in Kauf genommen werden können.

Eine möglichst exakte Anpassung des der Last zuzuführenden Stromes und damit der von ihr aufgenommenen Leistung an die dort zu jedem Zeitpunkt vorhandenen Betriebsbedingungen wird erreicht, wenn insbesondere die zeitliche Änderung des Verminderungswertes auf die zeitliche Veränderung dieser Betriebsbedingungen abgestimmt wird. Dies wird nach einer vorteilhaften Ausgestaltung der Erfindung, bei der die Last eine Gasentladungslampe umfaßt, dadurch erreicht, daß die Zeitkonstante für das Ansteigen des Verminderungswertes auf die Aufheizzeit der Gasentladungslampe nach Inbetriebnahme und daß wahlweise auch eine Zeitkonstante für ein Absinken des Verminderungswertes nach Außerbetriebsetzen der Last auf die Abkühlzeit der Gasentladungslampe abstimmbar ist.

Weitere vorteilhafte Ausgestaltungen der erfindungsgemäßen Schaltungsanordnung sind in den übrigen Unteransprüchen dargestellt.

Ausführungsbeispiele der Erfindung sind in der Zeichnung dargestellt und werden im nachfolgenden näher beschrieben. Es zeigen

Fig. 1 und 2 Beispiele für Schaltungsanordnungen zum Speisen einer Last aus einer Gleichspannungsquelle über ein Schaltnetzteil,

Fig. 3 ein Blockschaltbild eines Ausführungsbeispiels einer erfindungsgemäß ausgebildeten Steuerschaltung,

Fig. 4 Zeitdiagramme zur Funktion der Steuerschaltung nach nach Fig. 3,

Fig. 5 ein detailliertes Ausführungsbeispiel einer Steuerschaltung.

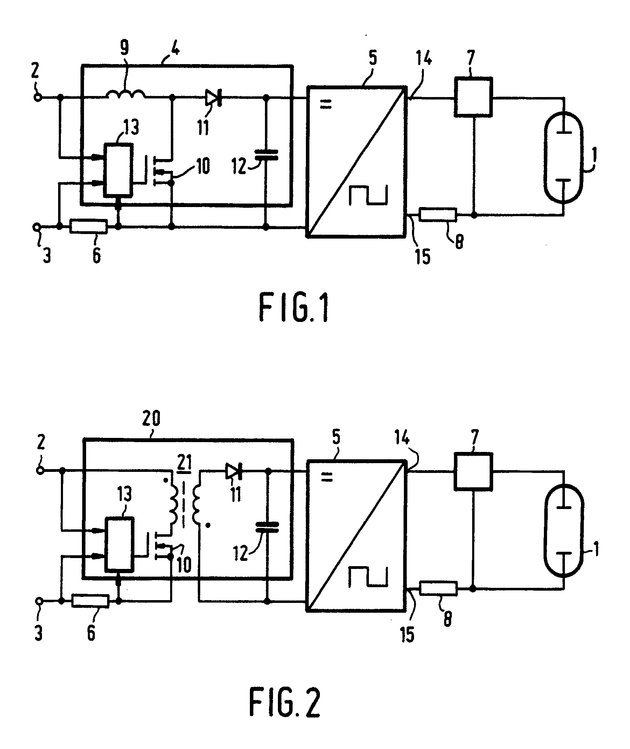

Fig. 1 zeigt ein Beispiel für eine Schaltungsanordnung, durch die eine Hochdruckgasentladungslampe 1 als Last aus einer mit zwei Speiseanschlüssen 2, 3 verbundenen, nicht dargestellten Gleichspannungsquelle über ein als Hochsetzsteller 4 ausgebildetes Schaltnetzteil sowie einen Wechselrichter 5 mit Energie versorgt wird. Der Hochsetzsteller 4 umfaßt eine Längsinduktivität 9, die mit einem Zerhackerschalter 10 sowie einem außerhalb des Hochsetzstellers 4 angeordneten Strommeßwiderstand 6 in Reihe zwischen den Speiseanschlüssen 2 und 3 angeordnet ist. Der Zerhackerschalter 10 wird im vorliegenden Fall durch einen Feldeffekttransistor gebildet. Vom Verbindungspunkt zwischen der Längsinduktivität 9 und dem Zerhackerschalter 10 führt ein weiterer Strompfad über eine Diode 11 zu einem Speicherkondensator 12. Von diesem wird eine Versorgungsspannung für die Weiterleitung von Energie an den Wechselrichter 5 abgegriffen.

Im Wechselrichter 5 wird die dem Speicherkondensator 12 entnommene Gleichspannung im Takt einer festen Umschaltfrequenz abwechselnd in unterschiedlicher Polung über Ausgangsanschlüsse 14, 15 der Last 1 zugeführt. Im Beispiel nach Fig. 1 ist zwischen die Ausgangsanschlüsse 14, 15 und die Last 1 - hier eine Hochdruckgasentladungslampe - eine Zündschaltung 7 geschaltet, durch die in an sich bekannter Weise bei Inbetriebnahme Hochspannungsimpulse erzeugt werden zum Zünden der Hochdruckgasentladungslampe 1. Ein Längswiderstand 8 kann wahlweise - wie eingezeichnet - in den Stromweg durch die Last 1 eingefügt werden.

Der Hochsetzsteller 4 enthält weiterhin eine Steuerschaltung 13, die hochfrequente Steuerimpulse erzeugt, mit denen der Zerhackerschalter 10 in schneller Folge ein- und ausgeschaltet wird. Dabei wird vorzugsweise eine Folgefrequenz der Steuerimpulse oberhalb 20 kHz eingehalten. Durch die Ausgestaltung der Steuerimpulse läßt sich der vom Hochsetzsteller 4 aus der Gleichspannungsquelle aufgenommene Strom steuern. Zur Steuerung werden die Steuerimpulse beispielsweise gemäß einer Pulsweiten-Modulation oder auch gemäß einer Hysterese-Kontrolle verändert. Ein Beispiel für das letztgenannte Steuerungsverfahren ist aus der EP-OS 59 053 bekannt, auf die bezüglich der Einzelheiten ausdrücklich verwiesen wird. Der vom Hochsetzsteller 4 aufgenommene Strom wird dabei mit einem Strommeßwiderstand 6 detektiert. In der Steuerschaltung werden zwei Stromsollwerte, nämlich ein unterer und ein oberer Sollwert, vorgegeben. Der Zerhackerschalter 10 wird bei ansteigendem Strom und Erreichen des oberen Sollwertes gesperrt und bei abfallendem Strom durch den Strommeßwiderstand 6 bei Erreichen des unteren Sollwertes wieder leitend geschaltet. Der Mittelwert des so erzeugten Stromes in den Speiseanschlüssen 2, 3 multipliziert mit der Spannung über diesen Speiseanschlüssen 2, 3 ergibt die von der Schaltungsanordnung aus der Gleichspannungsquelle aufgenommene Leistung.

Fig. 2 zeigt ein weiteres Beispiel für eine Schaltungsanordnung zum Speisen der Last 1, bei der der Hochsetzsteller 4 gegen einen Hochsetz-Tiefsetzsteller 20 ausgetauscht ist. Die übrigen Schaltelemente entsprechen denen der Fig. 1 und sind wieder mit den gleichen Bezugszeichen versehen. Dies gilt auch für die vom Hochsetz-Tiefsetzsteller 20 umfaßten Elemente, die sich von denen des Hochsetzstellers 4 im wesentlichen nur dadurch unterscheiden, daß die Längsinduktivität 9 durch einen Transformator 21 ersetzt ist. Dadurch wird einerseits eine galvanische Trennung zwischen der Gleichspannungsquelle und der Last 1 und andererseits ein größerer Wertebereich für die Wahl der dem Wechselrichter 5 und damit der Last 1 zuzuführenden Spannung geschaffen.

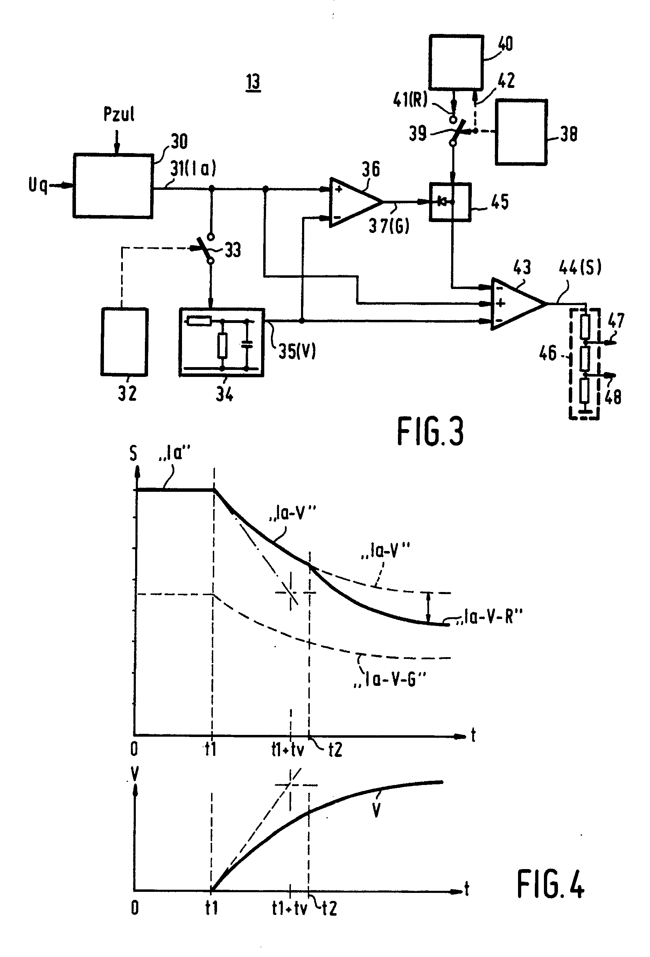

Fig. 3 zeigt als Blockschaltbild ein Beispiel für eine erfindungsgemäße Ausgestaltung der Steuerschaltung 13 aus den Fig. 1 und 2. Sie umfaßt einen Sollwertgeber 30, in dem aus einem vorgegebenen Wert für die von der Last höchstens aufzunehmende Leistung Pzul und einem gemessenen Wert der von der Gleichspannungsquelle gelieferten Spannung Uq ein Anlaufwert la bestimmt und an einem Ausgang 31 bereitgestellt wird. Der Wert für die von der Last höchstens aufzunehmende Leistung Pzul wird dabei fest vorgegeben und bestimmt sich unter Einrechnung der bekannten Verlustleistungen im Schaltnetzteil 4 bzw. 20 sowie im Wechselrichter 5, im Strommeßwiderstand 6 und ggf. im Längswiderstand 8. Im Gegensatz zu diesem fest eingestellten Wert Pzul stellt die Spannung Uq die tatsächlich zu jedem Zeitpunkt von der Gleichspannungsquelle an die Speiseanschlüsse 2, 3 gelieferte Spannung dar, die der Steuerschaltung 13 über in den Fig. 1 und 2 dargestellte, direkte Verbindungen von den Speiseanschlüssen 2, 3 her zugeführt wird. Für eine exakte Bestimmung des Anlaufwertes la umfaßt der Sollwertgeber 30 eine Divisionsvorrichtung zum Dividieren des Wertes Pzul durch den Wert Uq. In einer vereinfachten Ausführung ist im Sollwertgeber 30 lediglich eine Subtraktionsvorrichtung zum Subtrahieren eines die Spannung Uq darstellenden Wertes von dem vorgegebenen, die Leistung Pzul darstellen den Wert vorgesehen. Dadurch ist eine Schaltungsvereinfachung bei nur unwesentlich verringerter Genauigkeit möglich. Diese Differenz wird an einem wählbaren Arbeitspunkt gebildet, in dessen Umgebung die bei der Subtraktion entstehende, gerade Kennlinie von der exakten, hyperbelförmigen Kennlinie nur geringfügig abweicht.

Die Steuerschaltung 13 gemäß Fig. 3 umfaßt weiterhin ein erstes zeitbestimmendes Glied 32, das nach Ablauf einer ersten Verzögerungszeit t1 nach Inbetriebnahme der Schaltungsanordnung einen ersten Schalter 33 in einen leitenden Zustand überführt. Dadurch wird der Anlaufwert la vom Ausgang 31 des Sollwertgebers 30 nach Ablauf der ersten Verzögerungszeit t1 nach Inbetriebnahme auf eine Verzögerungsanordnung 34 fortgeschaltet. Die Verzögerungsanordnung 34 leitet aus dem Anlaufwert la einen von 0 beginnend stetig auf einen Endwert ansteigenden Verminderungswert ab und stellt diesen an einem Ausgang 35 zur Verfügung. Wie in Fig. 3 angedeutet, wird die Verzögerungsanordnung 34 bevorzugt durch ein RC-Netzwerk gebildet, in dem der allmählich ansteigende Verminderungswert durch die Aufladung einer Kapazität durch das den Anlaufwert la darstellende Signal über den ersten Schalter 33 erzeugt wird. Die Zeitkonstante des Anstiegs des mit V bezeichneten Verminderungswertes ist im vorliegenden Ausführungsbeispiel tv genannt.

Aus dem Anlaufwert la und dem Verminderungswert V wird als Linearkombination ein Grenzstromwert G in einer nachgeschalteten, ersten Addierschaltung 36 gebildet. Im einfachsten Fall besteht diese Linearkombination aus der Differenz zwischen dem Anlaufwert la und dem davon abgezogenen Verminderungswert V; die beiden Werte A und V können bei dieser Verknüpfung jedoch mit beliebigen, gemeinsamen oder gesonderten Verstärkungsfaktoren multipliziert werden. Dadurch kann der Grenzstromwert G einen für die nachfolgende Signalverarbeitung vorteilhaften Wertebereich annehmen. Er wird an einem Ausgang 37 der ersten Addierschaltung 36 zur Verfügung gestellt.

Mit Ablauf einer zweiten Verzögerungszeit t2 nach Inbetriebnahme der Schaltungsanordnung wird über ein ebenfalls von der Steuerschaltung 13 nach Fig. 3 umfaßtes, zweites zeitbestimmendes Glied 38 ein zweiter Schalter 39 in den leitenden Zustand überführt und dadurch eine Signalverbindung von einem Regler 40 für ein Regelsignal R geschlossen, das der Regler 40 an seinem Ausgang 41 abgibt. Das zweite zeitbestimmende Glied 38 kann mit dem Regler 40 außerdem über dessen Freigabeeingang 42 derart in einer Wirkverbindung stehen, daß der Regler 40 erst mit Ablauf der zweiten Verzögerungszeit t2 nach Inbetriebnahme der Schaltungsanordnung ein vorzugsweise mit dem Wert 0 beginnendes Regelsignal R bildet und vor diesem Zeitpunkt unwirksam geschaltet ist.

In einer ebenfalls von der Steuerschaltung 13 gemäß Fig. 3 umfaßten, zweiten Addierschaltung 43 wird ein Steuersignal S zum Steuern des Stromes durch die Last 1 als Linearkombination des Anlaufwertes Ia, des Verminderungswertes V und des Regelsignals R gebildet. Von der zweiten Addierschaltung 43 wird dieses Steuersignal S an einem Ausgang 44 abgegeben. In der zweiten Addierschaltung 43 werden bevorzugt der Verminderungswert V und das Regelsignal R gegensinnig zum Anlaufwert Ia mit diesem zum Steuersignal verknüpft; insbesondere werden Verminderungswert V und Regelsignal R vom Anlaufwert Ia subtrahiert. Das Regelsignal R wirkt somit wie der Verminderungswert V im Sinne einer Verringerung des Anlaufwertes Ia und somit einer Verringerung der anfänglich der Last 1 zugeführten Leistung auf den im Dauerbetrieb eingehaltenen Wert. Wie bei der ersten Addierschaltung 36 ist es auch bei der zweiten Addierschaltung 43 möglich, außer einer unmittelbaren Differenz der einzelnen Eingangsgrößen (Anlaufwert Ia, Verminderungswert V, Regelsignal R) jede dieser Größen mit einem wählbaren Faktor zu multiplizieren und erst dann additiv zu überlagern (bzw. zu subtrahieren), so daß auch hier eine beliebige Linearkombination zur Einstellung eines gewünschten Wertebereichs des Steuersignals S am Ausgang 44 erhalten werden kann.

Im Beispiel nach Fig. 3 wird das Regelsignal R vom Regler 40 durch das zweite zeitbestimmende Glied 38 über den zweiten Schalter 39 nicht unmittelbar der zweiten Addierschaltung 43 aufgeschaltet, sondern ihr über eine Begrenzerschaltung 45 zugeführt. Die Begrenzerschaltung 45 dient zum Begrenzen der Werte des Regelsignals R auf den Grenzstromwert G oder einen unmittelbar daran angebundenen Wert. Da das Regelsignal R zur Bildung des Steuersignals S in der zweiten Addierschaltung 43 mit negativem Vorzeichen herangezogen wird, bewirkt seine Begrenzung die Einhaltung eines Mindestwertes für das Steuersignal S, der nur vom Anlaufwert Ia und vom Verminderungswert V in Form einer Linearkombination dieser beiden Größen abhängt. Da sowohl der Anlaufwert Ia als auch der Verminderungswert V unmittelbar von der Dimensionierung der Last 1 bestimmt werden, kann somit der Mindestwert für das Steuersignal S unmittelbar nach dieser Dimensionierung festgelegt werden. Er dient dazu, bei Schwankungen der Betriebsbedingungen der Last und damit Variationen des Regelsignals R den Strom durch die Last 1 nicht unter einen für deren sicheren kontinuierlichen Betrieb erforderlichen Mindestwert absinken zu lassen. Dies ist insbesondere bei Betreiben einer Gasentladungslampe als Last 1 von Bedeutung, da solche Lampen beim Absinken des durch sie fließenden Stromes unter einen Mindestwert verlöschen. Ein solches Verlöschen ist aber bei bestimmten Anwendungsfällen der Lampen, beispielsweise als Kraftfahrzeugbeleuchtung, nicht zulässig und muß daher unbedingt vermieden werden.

Im einfachsten, in Fig. 3 dargestellten Fall umfaßt die Begrenzerschaltung 45 eine Diode, durch die ein den Grenzstromwert G überschreitendes Regelsignal R zum niederohmig ausgebildeten Ausgang 37 der ersten Addierschaltung 36 hin abfließt.

Da die Bildung des Regelsignals R im Regler 40 nach Beendigung des Anlaufzeitintervalls nicht Gegenstand der vorliegenden Erfindung ist, wird auf den inneren Aufbau des Reglers 40 im Rahmen dieser Beschreibung nicht näher eingegangen. Der Regler 40 kann beispielsweise eine Farbtemperaturregelung für eine Gasentladungslampe, eine Drehzahlregelung für einen Elektromotor, eine Temperaturregelung für eine Heizung oder dergleichen umfassen. Solche Regler sind im Prinzip bekannt.

Vom Ausgang 44 der zweiten Addierschaltung 43 gelangt das Steuersignal S als speisende Spannung an einen Widerstandsspannungsteiler 46. Dieser enthält im Beispiel der Fig. 3 zwei Abgriffe 47, 48 und ist an seinem dem Ausgang 44 gegenüberliegenden Ende an Masse geschaltet. Am "höheren" Abgriff 47 steht ein oberer, am "niedrigeren" Abgriff 48 ein unterer Stromsollwert für eine Steuerung des Zerhackerschalters 10 gemäß einer Hysterese-Kontrolle zur Verfügung, wie aus der EP-OS 59 053 bekannt.

Fig. 4 zeigt in Erläuterung zu Fig. 3 im oberen Teil den Zeitverlauf des Steuersignals S und im unteren Teil den Zeitverlauf des Verminderungswertes V. Die Inbetriebnahme der Schaltungsanordnung erfolgt zum Zeitpunkt "0". Von dort an bis zum Ablauf der ersten Verzögerungszeit t1 verschwinden sowohl der Verminderungswert V als auch das Regelsignal R. Demzufolge entspricht in diesem Zeitintervall das Steuersignal S dem Anlaufwert Ia.

Nach Überschreiten der ersten Verzögerungszeit t1 nimmt der Verminderungswert V mit der Zeitkonstanten tv stetig in Form einer Exponentialfunktion auf einen Endwert zu. Entsprechend sinkt das Steuersignal S gemäß der Differenz Ia-V stetig bis zu dem Zeitpunkt ab, an dem mit Ablauf der zweiten Verzögerungzeit t2 über den zweiten Schalter 39 das Regelsignal R auf die zweite Addierschaltung 43 geschaltet und dadurch das Steuersignal S zusätzlich um dieses Regelsignal R vermindert wird. Gegenüber der Differenzkurve zwischen dem Anlaufwert Ia und dem Verminderungswert V nimmt der zeitliche Verlauf des Steuersignals S noch einmal entsprechend ab.

Im oberen Diagramm der Fig. 4 ist zum Vergleich als gestrichelte Linie die Differenz zwischen dem Anlaufwert Ia einerseits und der Summe aus dem Verminderungswert V und dem Grenzstromwert G andererseits dargestellt. Exakterweise handelt es sich allerdings bei allen in diesem Teil des Diagramms dargestellten Verläufen um Linearkombinationen der beschriebenen Größen, in denen diese mit unterschiedlichen Faktoren Eingang finden. Dies ist durch die Anführungsstriche an der Beschriftung der Kurven angedeutet. Die Kurve "Ia-V-G" bildet die untere Grenze für das Steuersignal S, die wie beschrieben durch die Begrenzerschaltung 45 festgelegt ist. Im vorliegenden Beispiel ist außerdem angenommen, daß das Regelsignal R keine negativen Werte annimmt, so daß die Kurve "Ia-V" die Obergrenze des Wertebereichs des Steuersignals S bildet. Der allmähliche Übergang des Steuersignals nach dem mit t2 bezeichneten Zeitpunkt erfolgt durch allmähliches Ein stellen des Regelsignals R auf einen bestimmten Betriebswert und kann je nach Ausbildung der Regelung, d.h. des Reglers 40, auch andere zeitliche Verläufe annehmen.

Bevorzugt ist die Zeitkonstante tv auf das Verhalten der Last 1 im Anlaufzeitintervall abgestimmt. Insbesondere, wenn die Last 1 eine Gasentladungslampe umfaßt, ist die Zeitkonstante tv für das Ansteigen des Verminderungswertes V auf die Aufheizzeit dieser Gasentladungslampe nach Inbetriebnahme der Schaltungsanordnung abstimmbar. Entsprechend kann auch eine Zeitkonstante für ein Absinken des Verminderungswertes V nach Außerbetriebsetzen der Last 1 und damit der darin umfaßten Gasentladungslampe auf deren Abkühlzeit abstimmbar sein. Damit wird erreicht, daß der Verminderungswert V entsprechend den Betriebsparametern der Gasentladungslampe, insbesondere der durch die Lampentemperatur vorgegebenen Stromaufnahmefähigkeit, angepaßt wird. Bei kurzen Betriebsunterbrechungen, bei denen die Gasentladungslampe nicht vollständig oder auch nur geringfügig abkühlt, kann dann ein Wiederanlaufen unabhängig von dem jeweiligen Betriebszustand unter optimalen Bedingungen erfolgen.

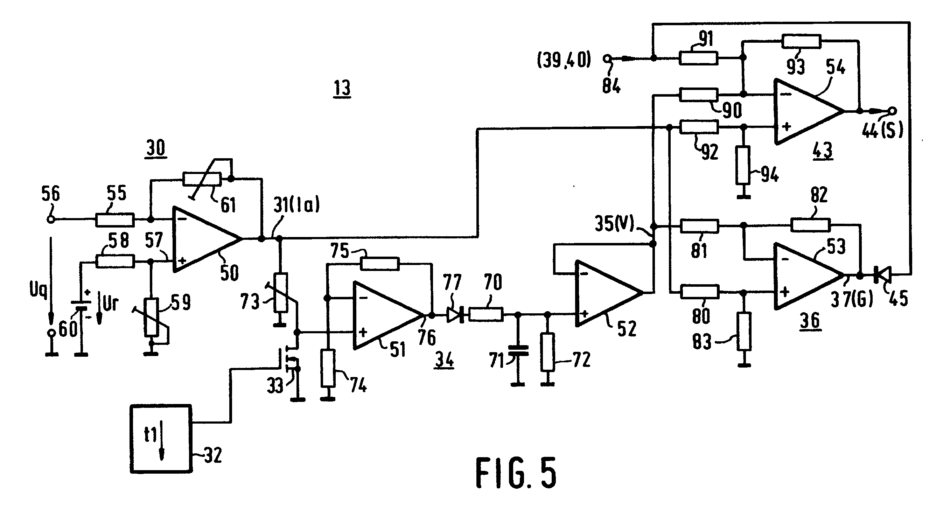

Fig. 5 zeigt ein etwas detaillierteres Ausführungsbeispiel für eine Steuerschaltung 13, in der bereits beschriebene Elemente und Signale wieder mit denselben Bezugszeichen versehen sind. Für einen einfachen und preiswerten Aufbau sind in der gesamten Anordnung Standard-Operationsverstärker verwendet worden.

Im Beispiel nach Fig. 5 umfaßt der Sollwertgeber 30 einen ersten Operationsverstärker 50, dem am invertierenden Eingang über einen Eingangswiderstand 55 die zwischen einem Eingangsanschluß 56 und Masse anliegende, von der Gleichspannungsquelle gelieferte Spannung Uq zugeführt wird. Beim Einsatz in einer Schaltungsanordnung gemäß den Fig. 1 und 2 würde beispielsweise der Eingangsanschluß 56 mit dem Speiseanschluß 2 und der Masseanschluß mit dem Speiseanschluß 3 verbunden sein. Der nichtinvertierende Eingang des ersten Operationsverstärkers 50 liegt am Abgriff 57 eines aus einem Festwiderstand 58 und einem ersten Potentiometer 59 bestehenden, durch eine Referenzspannung Ur aus einer Referenzspannungsquelle 60 gespeisten Spannungsteilers. Ein zweites Potentiometer 61 dient als Rückkopplung vom Ausgang 31 des Sollwertgebers 30 und damit des ersten Operationsverstärkers 50 zu dessen invertierendem Eingang.

Der erste Operationsverstärker 50 bildet mit seiner Beschaltung den Anlaufwert Ia aus einer Linearkombination der von der Last höchstens aufzunehmenden Leistung Pzul und der von der Gleichspannungsquelle gelieferten Spannung Uq gemäß einer durch einen Arbeitspunkt gelegten, geraden Kennlinie. Anfangswert und Steigung dieser Geraden werden durch die Einstellung des ersten und des zweiten Potentiometers 59, 61 eingestellt. Die Dimensionierung des Sollwertgebers 30 erfolgt bevorzugt nach folgender Gleichung:

$$Ia = Pzul(0{,}5X-Uq)/Y,$$

wobei X das Quadrat der Summe der Quadratwurzeln des unteren und des oberen Grenzwertes der von der Gleichspannungsquelle gelieferten Spannung Uq und X das Produkt dieser Grenzwerte ist. Durch diese Dimensionierung wird der mittlere, quadratische Fehler minimal. Der Anlaufwert Ia läßt sich dabei mit einem Fehler von weniger als 4 % nach oben oder unten vom exakten Wert abweichend für einen Wertebereich der von der Gleichspannungsquelle gelieferten Spannung Uq festlegen, der um 25 % nach oben oder nach unten von einem Nennwert der Gleichspannungsquelle abweichen kann. Mit der Einstellung des ersten und zweiten Potentiometers 59 und 61 lassen sich außerdem unterschiedliche Werte des Verhältnisses der in der Schaltungsanordnung auftretenden Leistungsverluste zu der von der Last aufgenommenen Leistung bei unterschiedlichen Werten der Spannung Uq kompensieren.

Die Verzögerungsanordnung 34 wird im Schaltungsbeispiel nach Fig. 5 durch eine Kombination aus einem Ladewiderstand 70 und der Parallelschaltung eines Kondensators 71 mit einem Entladewiderstand 72 gebildet. Dieses RC-Netzwerk 70, 71, 72 wird über einen zweiten Operationsverstärker 51 aufgeladen. Dem Operationsverstärker 51 wird an seinem nichtinvertierenden Eingang über ein drittes Potentiometer 73 der Anlaufwert Ia vom Ausgang 31 zugeführt. Der invertierende Eingang des zweiten Operationsverstärkers 51 ist über einen zweiten Eingangswiderstand 74 mit Masse und über einen ersten Rückkopplungswiderstand 75 mit dem Ausgang 76 des zweiten Operationsverstärkers 51 gekoppelt. Eine Schutzdiode 77 zwischen dem Ausgang 76 und dem Ladewiderstand 70 verhindert eine Entladung des Kondensators 71 über den niederohmigen Ausgang 76 bei abgeschaltetem zweitem Operationsverstärker 51. Für eine möglichst hochohmige Auskopplung des Verminderungswertes V vom Kondensator 71 ist dieser mit dem nichtinvertierenden Eingang eines von seinem Ausgang gegen seinen invertierenden Eingang kurzgeschlossenen dritten Operationsverstärkers 52 verbunden. Der Ausgang des dritten Operationsverstärkers 52 bildet zugleich den Ausgang 35 der Verzögerungsanordnung 34.

Vom ersten zeitbestimmenden Glied 32 wird gemäß Fig. 5 ein als erster Schalter fungierender Transistor gesteuert, der beginnend mit der Inbetriebnahme der Schaltungsanordnung bis zum Ablauf der ersten Verzögerungszeit t1 leitend geschaltet ist und damit die Zufuhr des Anlaufwertes Ia über das dritte Potentiometer 73 an den nichtinvertierenden Eingang des zweiten Operationsverstärkers 51 unterbindet. Erst nach Beendigung des durch den ersten Schalter 33 gebildeten Kurzschlusses beginnt der zweite Operationsverstärker 51 mit der Aufladung des Kondensators 71.

Die erste Addierschaltung 36 umfaßt im Beispiel nach Fig. 5 einen vierten Operationsverstärker 53, dessen nichtinvertierendem Eingang der Anlaufwert Ia über einen dritten Eingangswiderstand 80 und dessen invertierendem Eingang der Verminderungswert V über einen vierten Eingangswiderstand 81 zugeleitet werden. Vom Ausgang des vierten Operationsverstärkers 53, der zugleich den Ausgang 37 der ersten Addierschaltung 36 bildet, ist ein zweiter Rückkopplungswiderstand 82 an den invertierenden Eingang des vierten Operationsverstärkers 53 geführt, und sein nichtinvertierender Eingang ist über einen fünften Eingangswiderstand 83 mit Masse gekoppelt.

Die Begrenzerschaltung 45 wird durch eine Diode gebildet, deren Kathode mit dem Ausgang 37 der ersten Addierschaltung 36 und deren Anode mit einem Anschluß 84 verbunden ist, an dem das Regelsignal R vom Regler 40 über den zweiten Schalter 39 zugeführt wird.

Die zweite Addierschaltung 43 wird in Fig. 5 durch einen fünften Operationsverstärker 54 gebildet, dem an seinem invertierenden Eingang über einen sechsten Eingangswiderstand 90 der Verminderungswert V vom Ausgang 35 und über einen siebten Eingangswiderstand 91 das Regelsignal R vom Anschluß 84 zugeleitet werden. Über einen achten Eingangswiderstand 92 liegt am nichtinvertierenden Eingang des fünften Operationsverstärkers 54 der Anlaufwert Ia an. Ähnlich der ersten Addierschaltung 36 ist auch beim fünften Operationsverstärker 54 der zweiten Addierschaltung 43 ein dritter Rückkopplungswiderstand 93 vom Ausgang, der den Ausgang 44 der zweiten Addierschaltung 43 bildet, zum invertierenden Eingang geführt, und vom nichtinvertierenden Eingang ist ein neunter Eingangswiderstand 94 an Masse geführt. Somit werden im fünften Operationsverstärker 54 das Regelsignal R, der Verminderungswert V und der Anlaufwert Ia gemäß dem Verhältnis der Werte des sechsten bis achten Eingangswiderstands 90 bis 92 und gemäß dem Vorzeichen des zugeordneten Eingangs des fünften Operationsverstärkers 54 additiv verknüpft.

Anstelle eines eine feste zweite Verzögerungszeit t2 vorgebenden, zweiten zeitbestimmenden Gliedes 38 kann vorteilhaft eine Anordnung vorgesehen sein, durch die die zweite Verzögerungszeit t2, d.h. der Zeitpunkt des Zuschaltens des Regelsignals R auf die zweite Addierschaltung 43, abhängig von der aktuellen Temperatur einer von der Last 1 umfaßten Gasentladungslampe eingestellt wird. Diese - nicht dargestellte - Anordnung fußt auf der Voraussetzung, daß die Zeitkonstante tv der Aufladung des Kondensators 71 sowie seine Entladungs-Zeitkonstante möglichst weitgehend an Aufheizung und Abkühlung der Gasentladungslampe angepaßt sind. Es kann dann der Verminderungswert V mit dem Anlaufwert Ia verglichen werden, beispielsweise in der ersten Addierschaltung 36 oder einer entsprechend aufgebauten Signalverarbeitungsstufe. Sobald die Differenz zwischen diesen Werten einen vorgegebenen Wert unterschreitet, wird der zweite Schalter 39 in den leitenden Zustand überführt und damit das Regelsignal R an die zweite Addierschaltung 43 weitergeleitet. Die Regelung der Last 1 setzt dann stets bei den gleichen Betriebsbedingungen ein.

**Ansprüche**

1. Schaltungsanordnung zum Speisen einer Last (1) aus einer Gleichspannungsquelle (an 2, 3) über ein Schaltnetzteil (4), mit einer Steuerschaltung (13) zum Steuern des Stromes durch die Last (1) in einem Anlaufzeitintervall nach Inbetriebnahme, dadurch gekennzeichnet , daß die Steuerschaltung (13) zur Durchführung folgender Signalverarbeitungsschritte eingerichtet ist:

- Bestimmen eines Anlaufwertes (Ia) für den Strom durch die Last (1) aus einer vorgegebenen, von der Last (1) höchstens aufzunehmenden Leistung (Pzul) und der von der Gleichspannungsquelle gelieferten Spannung (Uq),
- mit Ablauf einer ersten Verzögerungszeit (t1) nach Inbetriebnahme einsetzendes Ableiten eines von Null stetig auf einen Endwert ansteigenden Verminderungswertes (V) aus dem Anlaufwert (Ia),
- Bilden eines Grenzstromwertes (G) als Linearkombination aus dem Anlaufwert (Ia) und dem Verminderungswert (V),
- mit Ablauf einer zweiten Verzögerungszeit (t2) nach Inbetriebnahme einsetzendes Zuführen eines Regelsignals (R) von einem Regler (40) bei gleichzeitigem Begrenzen der Werte des Regelsignals (R) auf den Grenzstromwert (G) und
- Bilden eines Steuersignals (S) zum Steuern des Stromes durch die Last als Linearkombination des Anlaufwertes (Ia), des Verminderungswertes (V) und des Regelsignals (R).

2. Schaltungsanordnung nach Anspruch 1, dadurch gekennzeichnet , daß die Steuerschaltung (13) einen Sollwertgeber (30) zum Bestimmen des Anlaufwertes (Ia) für den Strom durch die Last (1) als Quotienten aus der vorgegebenen Leistung (Pzul) und der gemessenen Spannung (Uq) der Gleichspannungsquelle enthält.

3. Schaltungsanordnung nach Anspruch 1, dadurch gekennzeichnet , daß der Anlaufwert (Ia) für den Strom durch die Last (1) als Differenz eines die vorgegebene Leistung (Pzul) darstellenden Wertes und der gemessenen Spannung (Uq) der Gleichspannungsquelle an einem wählbaren Arbeitspunkt bestimmbar ist.

4. Schaltungsanordnung nach Anspruch 1, dadurch gekennzeichnet , daß die Steuerschaltung (30) ein erstes zeitbestimmendes Glied (32) zum Fortschalten des Anlaufwertes (Ia) nach Ablauf der ersten Verzögerungszeit (t1) und eine Verzögerungsanordnung (34) zum Ableiten des Verminderungswertes (V) aufweist.

5. Schaltungsanordnung nach Anspruch 4, dadurch gekennzeichnet , daß die Verzögerungsanordnung (34) ein RC-Netzwerk (70, 71, 72) umfaßt.

6. Schaltungsanordnung nach Anspruch 1, dadurch gekennzeichnet , daß die Steuerschaltung (30) eine erste Addierschaltung (36) zum Bilden des Grenzstromwertes (G) aufweist.

7. Schaltungsanordnung nach Anspruch 1, dadurch gekennzeichnet , daß die Steuerschaltung (30) eine zweite Addierschaltung (43) zum Bilden des Steuersignals (S) aufweist.

8. Schaltungsanordnung nach Anspruch 1, dadurch gekennzeichnet , daß im Steuersignal (S) Verminderungswert (V) und Regelsignal (R) gegensinnig zum Anlaufwert (Ia) verknüpft werden.

9. Schaltungsanordnung nach Anspruch 1, dadurch gekennzeichnet , daß die Steuerschaltung (30) ein zweites zeitbestimmendes Glied (38) zum Aufschalten des Regelsignals (R) auf die zweite Addierschaltung (43) umfaßt.

10. Schaltungsanordnung nach Anspruch 1, dadurch gekennzeichnet , daß das Regelsignal(R) der zweiten Addierschaltung (43) über eine Begrenzerschaltung (45) zuführbar ist.

11. Schaltungsanordnung nach einem der vorhergehenden Ansprüche, dadurch gekennzeichnet , daß die Last (1) eine Gasentladungslampe umfaßt.

12. Schaltungsanordnung nach Anspruch 4 oder 5 in Verbindung mit Anspruch 11, dadurch gekennzeichnet , daß die Zeitkonstante (tv) für das Ansteigen des Verminderungswertes (V) auf die Aufheizzeit der Gasentladungslampe nach Inbetriebnahme abstimmbar ist.

13. Schaltungsanordnung nach Anspruch 4 oder 5 in Verbindung mit Anspruch 11, dadurch gekennzeichnet , daß eine Zeitkonstante für ein Absinken des Verminderungswertes nach Außerbetriebsetzen der Last (1) auf die Abkühlzeit der Gasentladungslampe abstimmbar ist.

FIG.1

FIG.2

FIG.3

FIG.4

FIG.5

EP 0 415 496 A2